# EUROPEAN PATENT SPECIFICATION

(11) **EP 2 189 360 B1**
(45) Date of publication and mention of the grant of the patent: **14.12.2011**
(21) Application number: 09163977.3
(22) Date of filing: 29.06.2009
(51) Int. Cl.: B62J 6/02, B62J 99/00

(54) **Coupling structure of dashboard and headlight**
Verbindungsstruktur von Armaturenbrett und Scheinwerfer
Structure de couplage de tableau de bord et phares

(30) Priority: 19.11.2008 TW 97144638
(43) Date of publication of application: 26.05.2010
(73) Proprietor: Kwang Yang Motor Co., Ltd., San-Min Dist., Kaohsiung City (TW)
(72) Inventor: Tu, Shih-Wang, Cambridge Cambridgeshire CB21FD (GB)
(74) Representative: Horak, Michael

(56) References cited:
- EP-A- 1 564 122
- DE-A1- 10 342 106
- FR-A- 1 586 928
- US-A- 6 158 279

## Description

### (a) Technical Field of the Invention

The present invention generally relates to a coupling structure of dashboard and headlight, and more particularly to a coupling structure that simplifies assembling operation and protects internal components of the dashboard from damage caused by vibration induced in the movement of a vehicle.

### (b) Description of the Prior Art

Motorcycles are commonly used and play an important role as short distance transportation. A huge number of motorcycles are manufactured and sold in the market each year, making a substantial contribution to the economic development. In respect of transportation, besides public transportation, such as subways and buses, private transportation, such as passenger cars and motorcycles, is also commonly used. The motorcycle is advantageous of being convenient and efficient, and is not matched by other transportation means in these respects.

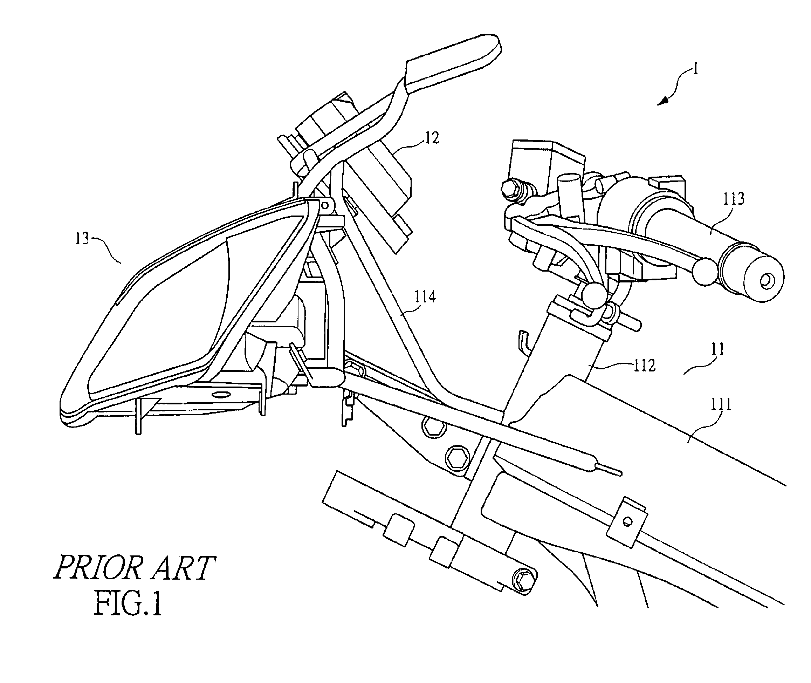

Referring to FIG 1 of the attached drawings, a conventional motorcycle 1 comprises a frame 11 that has a main tube 111. A head tube 112 is set in front of the main tube 111. The head tube 112 rotatably supports steering handlebars 113. The main tube 111 and the head tube 112 are extended frontward to form a front support 114 that extends upwards and rotatably supports a dashboard 12. A headlight 13 is mounted to the front side of the front support 114. The dashboard 12 provides information of vehicle movement to a rider and the headlight 13 provides lighting and alarming. However, since the dashboard 12 is set at a topmost location of the front support 114, when the motorcycle 1 is in movement, the magnitude of vibration occurring in the dashboard 12 is magnified, leading to damage of the internal components of the dashboard 12. Further, the fact that the front support 114 is exposed also makes the motorcycle 1 poor in outside looking. In addition, excessive extension of the front support 114 may lead to severely magnified vibration, and thus, the front support 114 often needs reinforcement. Further, in the conventional structure, the headlight 13 and the dashboard 12 are assembled separately and achieving a desired precision in matching the two is difficult, leading to complication of assembling.

US-A-6158279 discloses a speedometer mounting device for a vehicle. However, the reference cannot protect the dashboard from damage caused by vibration inducted in the movement of the motorcycle.

In view of the above discussed problems of the conventional coupling structure of the motorcycle dashboard, it is a challenge of the motorcycle industry to develop a coupling structure that protects the dashboard from damage caused by vibration induced in the movement of the motorcycle.

### SUMMARY OF THE INVENTION

The primary objective of the present invention is to provide a coupling structure of dashboard and headlight, comprising at least a dashboard, a support element, and a headlight. The dashboard has a rear side wall from which a plurality of fixation studs projects. The rear side wall of the dashboard is covered by an enclosure. The enclosure has a bottom to which a shock absorbtion element is mounted. The support element has an upper portion forming a first fixation end that defines a plurality of fixation holes corresponding to the fixation studs for receiving the fixation studs to extend therethrough and be secured by nuts. The support element has a lower portion forming a second fixation end that defines a plurality of connection holes and forms a bent positioning section below the connection holes. The headlight comprises a retention seat from which a plurality of threaded rods projects to correspond to the connection holes of the support element. The headlight forms a plurality of coupling holes on outer sides thereof for mounting to a motorcycle frame. By securing the support element between the dashboard and the headlight to make the headlight and the dashboard modularized and then securing the modularized headlight to the motorcycle frame, the assembling operation can be simplified. The arrangement of the connection holes and the positioning section of the support element helps to prevent the dashboard from shaking in frontward, rearward, upward, and downward directions during the movement of the motorcycle and thus protecting the internal components of the dashboard from damage caused by vibration.

Each fixation hole forms a side opening through which a resilient element is fit into the fixation hole. The resilient element forms a through hole for fitting over a corresponding fixation stud of the dashboard. The resilient element absorbs the vibration induced by the movement of the motorcycle thereby providing further effect of suppression of vibration of the dashboard.

Another objective of the present invention is to provide a coupling structure of dashboard and headlight, comprising at least a dashboard, a support element, and a headlight whereby the headlight comprises a rack mounted thereon. The rack has two sides each forming a turn signal light and through holes corresponding to the coupling holes of the headlight By setting the rack on the headlight and extending fastening elements through the through holes of the rack and tightened the motorcycle frame, efficient positioning for assembling can be realized.

A further technical solution of the present invention is to provide a coupling structure of dashboard and headlight, comprising at least a dashboard, a support element, and a headlight. The dashboard comprises an enclosure in which a plurality of through holes corresponding to the threaded positioning pegs is defined for receiving fastening elements to extend therethrough and threadingly engaging the threaded positioning pegs, whereby the enclosure and a main body of the dashboard are coupled together to realize modularization. The enclosure has a bottom having front flange extending toward a front side of the motorcycle and carrying the shock absorption element. The shock absorption element is made of resilient rubber materials. By positioning the shock absorption element on the top of the headlight, the vibration transmitted from the motorcycle to the dashboard can be effectively absorbed and suppression of vibration of the dashboard can be realized.

The invention is defined in claim 1. Advantageous embodiments of the invention are set out in dependent claims 2-12.

The foregoing objectives and summary provide only a brief introduction to the present invention To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is schematic view illustrating a conventional way of coupling a dashboard and a headlight of a motorcycle.
FIG 2 is a side elevational view of a motorcycle in accordance with the present invention.
FIG 3 is an exploded view of a dashboard and a support element in accordance with the present invention.
FIG 4 is a perspective view of the dashboard and a headlight of the present invention, which are detached from each other.
FIG 5 is a perspective view of the dashboard and headlight of the present invention in assembled form.
FIG 6 is a cross-sectional view of the dashboard and the headlight of the present invention.
FIG 7 is an exploded view of another embodiment of the present invention.
FIG 8 is an assembled view of FIG 7.

### DETAILED DESCRIPTION OF THE PREFERRED EMBODIMENTS

The following descriptions are exemplary embodiments only, and are not intended to limit the scope, applicability or configuration of the invention in any way Rather, the following description provides a convenient illustration for implementing exemplary embodiments of the invention. Various changes to the described embodiments may be made in the function and arrangement of the elements described without departing from the scope of the invention as set forth in the appended claims.

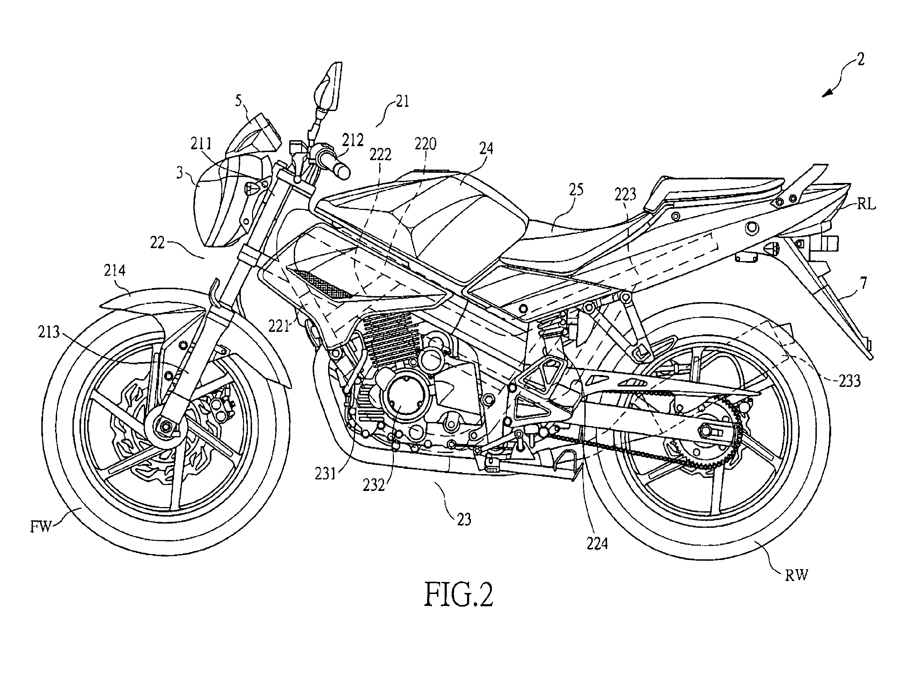

Referring to FIG 2, which shows a side elevational view of a motorcycle constructed in accordance with the present invention, the motorcycle, generally designated at 2, comprises a steering mechanism 21, a motorcycle frame 22, a power unit 23, a fuel tank 24, and a driver's seat 25.

The steering mechanism 21 comprises a head tube 211 that supports thereon a steering handlebar 212. A headlight 3 is mounted to a front side of the head tube 211. A dashboard 5 is mounted above the headlight 3. The head tube 211 is connected at a lower end thereof to a front shock absorber 213. The front shock absorber 213 is supported, at a lower end thereof, by a front wheel FW. A front fender 214 is mounted between the head tube 211 and the front wheel FW.

The frame 22 comprises a main tube 220 extending from an upper portion of the head tube 211 in a rearward direction and inclining downward. A lower tube 221 extends from a middle portion of the head tube 211. A reinforcement tube 222 is arranged between the main tube 220 and the lower tube 221.

The power unit 23 is arranged between the main tube 220 and the lower tube 221. A rear frame 223 extends from a front end of the driver's seat 25 toward a rear side of the motorcycle 2 to reach a tail of the motorcycle. The rear frame 223 supports the driver's seat 25. A rear shock absorber 224 is arranged under the rear frame 223 and the rear shock absorber 224 is supported by a rear wheel RW. Further, the rear frame 223 carries a tail light RL at a rear end thereof A rear fender 7 is arranged between the tail light RL and the rear wheel RW.

The power unit 23 comprises at least one engine 231, a crankshaft transmission 232, and an exhaust pipe 233. The engine 231 comprises a piston and a combustion chamber (not shown). The engine 231 is suspended on an engine rack. The crankshaft transmission 232 comprises a crankshaft and a transmission system (not shown).

The fuel tank 24 is set between the rear side of the head tube 211 and the driver's seat 25. The fuel tank 24 is formed by welding upper and lower tank shells (not shown) to define an interior space for accommodating fuel of the motorcycle 2.

The driver's seat 25 comprises a cushion having a bottom forming a seat shell made of a rigid material and an upper portion made of a soft material and enclosed by a decoration layer to allow a driver to comfortably sit thereon.

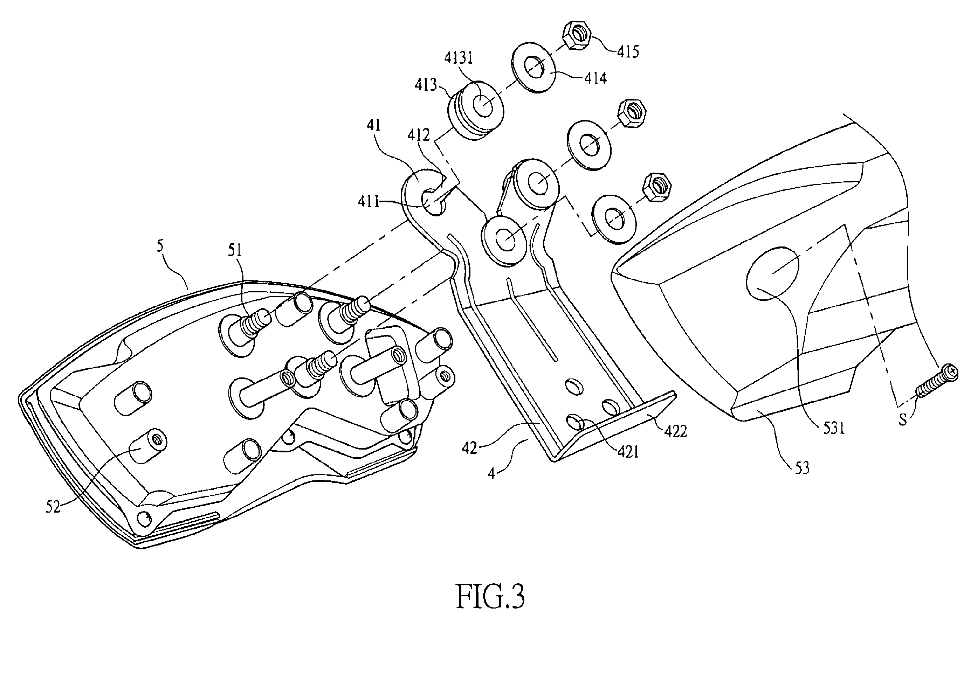

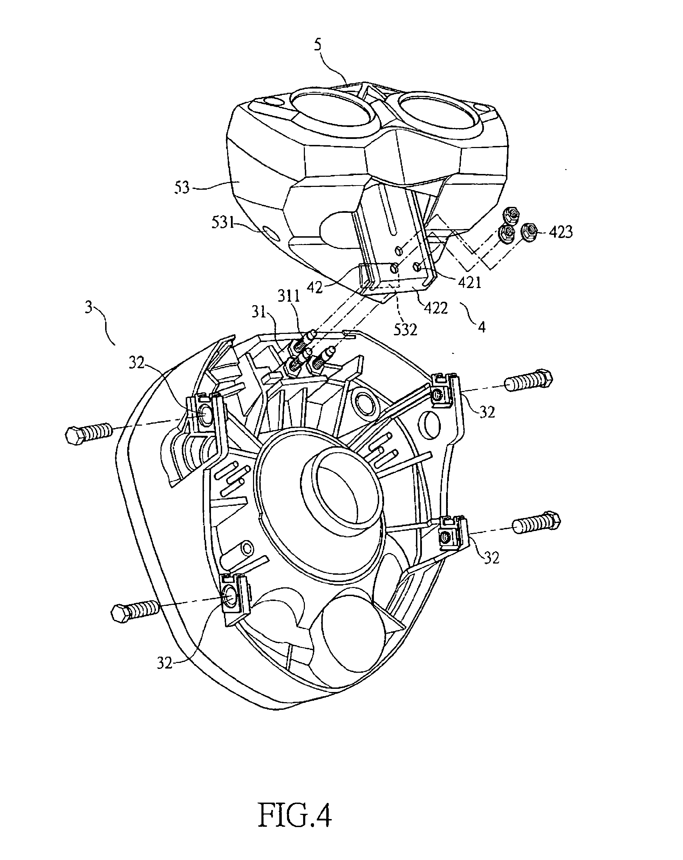

Referring to FIGS. 3 and 4, a coupling structure of dashboard and headlight in accordance with the present invention comprises at least the dashboard 5, a support element 4, and the headlight 3.

The dashboard 5 comprises a plurality of fixation studs 51 extending from a rear side wall thereof A plurality of threaded positioning pegs 52 is formed on opposite sides of the fixation studs 51. The fixation studs 51 are arranged in an inverted triangle. The dashboard 5 also comprises and is covered by an enclosure 53. The enclosure 53 forms through holes 531 corresponding to the threaded positioning pegs 52. The through holes 531 receive fastening elements S to extend therethrough and threadingly engage the threaded positioning pegs 52 in order to couple the enclosure 53 and a main body of the dashboard 5. The enclosure 53 has a bottom having front flange extending toward a front side of the vehicle and carrying a shock absorption element 532, which is made of resilient rubber materials.

The support element 4 comprises a board made of a rigid material. The support element 4 has an upper portion forming a first fixation end 41 in the form of a Y-shape. The first fixation end 41 forms a plurality of fixation holes 411 corresponding to the fixation studs 51. Each fixation hole 411 forms a side opening 412 through which a resilient element 413 can be fit into the fixation hole 411. The resilient element 413 comprises a rubber body The resilient element 413 forms in a center thereof a through hole 4131 for fitting over a corresponding fixation stud 51 of the dashboard 5. The support element 4 has a lower portion forming a second fixation end 42. The second fixation end 42 forms a plurality of connection holes 421 and a bent positioning section 422 below the connection holes 421.

The headlight 3 is arranged at the front end of the motorcycle 2. The headlight 3 comprises a retention seat 31 above the headlight 3. The retention seat 31 forms a plurality of threaded rods 311 projecting therefrom and corresponding to the connection holes 421 of the support element 4. The headlight 3 also forms a plurality of coupling holes 32 for mounting to the steering mechanism 21.

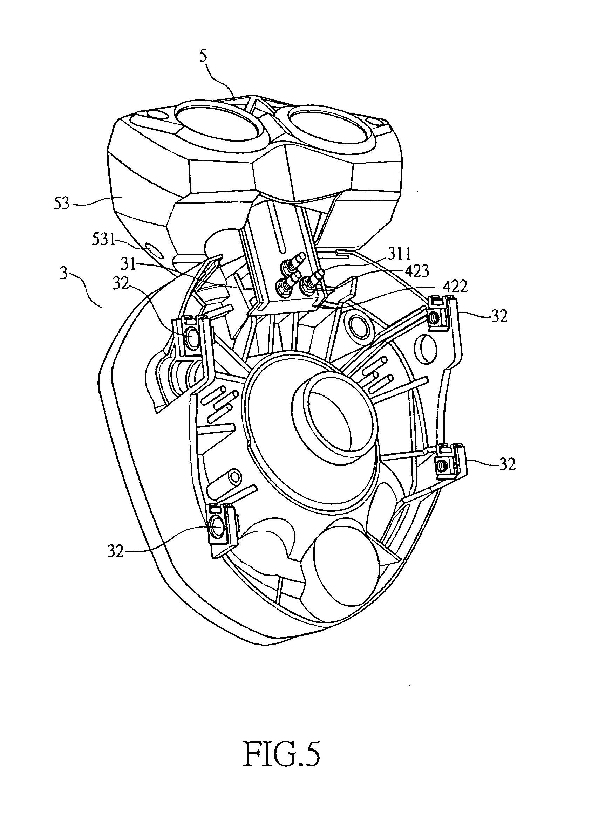

Referring to FIGS. 3 and 4, to practice the present invention, the fixation holes 411 of the first fixation end 41 of the support element 4 are first fit with the resilient elements 413 and the resilient elements 413 are fit over the fixation studs 51 of the dashboard 5. A washer 414 is fit over each fixation stud 51 and a nut 415 is tightened to couple the support element 4 to the dashboard 5. The enclosure 53 is then secured to the threaded positioning pegs 52 of the dashboard 5. Afterwards, the connection holes 421 of the second fixation end 42 of the support element 4 are set corresponding to and fit over the threaded rods 311 of the retention seat 31 of the headlight 3 and then secured by nuts 423. Under this condition, the positioning section 422 of the support element 4 is positioned against a bottom of the retention seat 31 and the shock absorption element 532 provided on the bottom of the enclosure 53 is positioned against a top of the headlight 3, as shown in FIG 5.

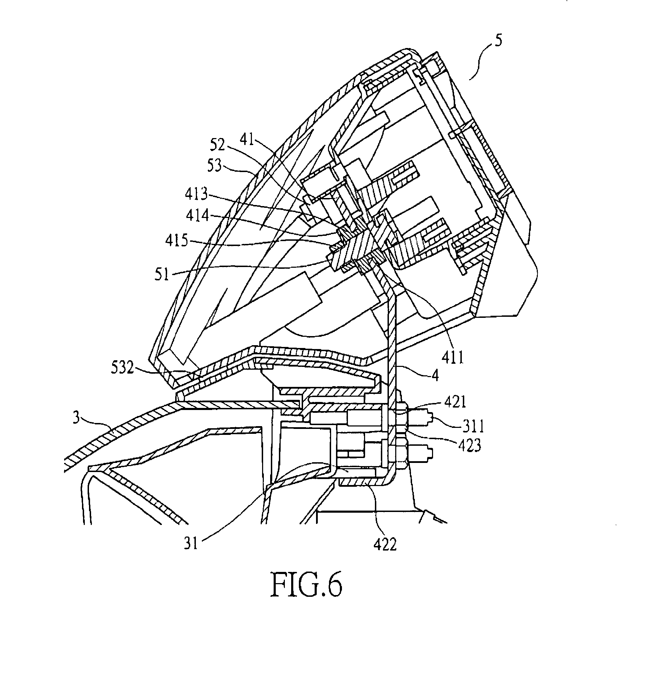

The present invention provides a support element 4 secured between the dashboard 5 and the headlight 3 to allow the dashboard 5 to be mounted to the headlight 3 first and then the headlight 3 is fixed to the head tube 211, whereby the assembling operation is simplified. The connection holes 421 and the second fixation end 42 of the support element 4 function to prevent the dashboard 5 from shaking frontward and rearward and upward and downward during the movement of the motorcycle 2. As shown in FIG 6, by positioning the shock absorption element 532 that is provided on the bottom of the enclosure 53 on the top of the headlight 3, the vibration transmitted from the motorcycle 2 to the dashboard 5 can be effectively absorbed and further suppression of vibration of the dashboard 5 can be realized.

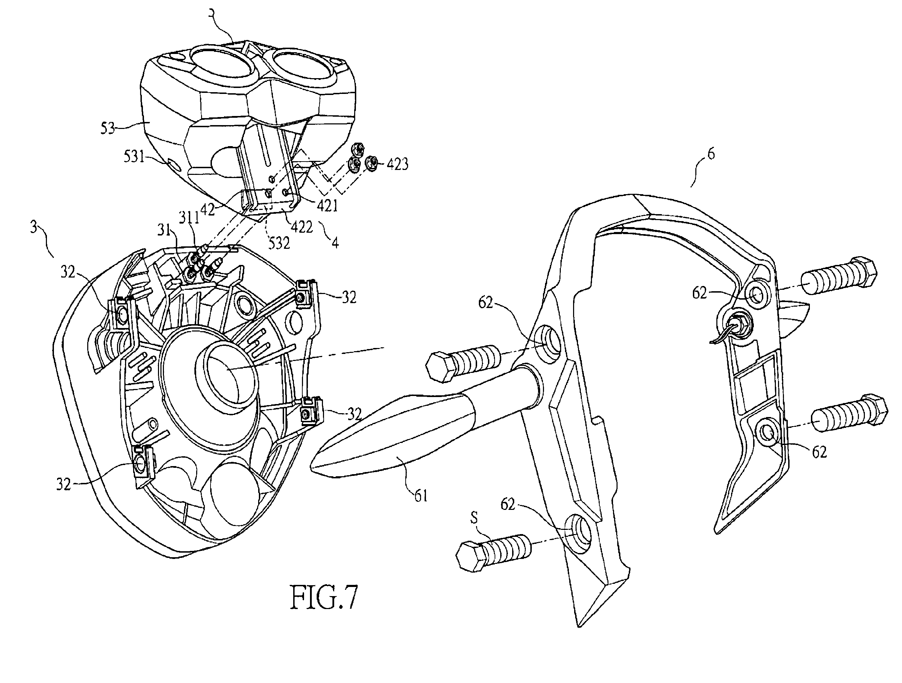

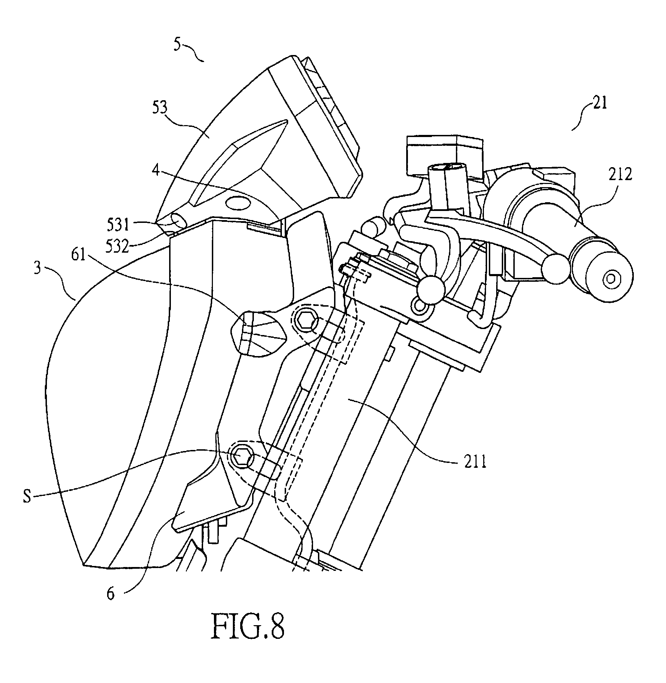

Referring to FIG 7, in the practice of the present invention, the headlight 3 is further provided with a rack 6 mounted thereon. The rack 6 has two sides each forming a turn signal light 61 and through holes 62 corresponding to the coupling holes 32 of the headlight 3. To assemble, the rack 6 is set on the headlight 3 and fastening elements S extend through the through holes 62 of the rack 6 and are tightened to the head tube 211 of the motorcycle 2, as shown in FIG 8.

The effectiveness of the present invention is that by securing the support element 4 between the dashboard 5 and the headlight 3 to make the headlight 3 and the dashboard 5 modularized and then securing the modularized headlight 3 to the head tube 211 of the motorcycle 2, the assembling operation of the headlight 3 and the dashboard 5 can be simplified. By first assembling the dashboard 5 and the headlight 3 together to form a module, the problem of keeping precision in matching the dashboard 5 and the headlight 3 that are installed separately can be eliminated. The connection holes 421 and the positioning section 422 of the support element 4 and the shock absorption element 532 of the enclosure 53 are helpful in preventing the dashboard 5 from shaking in frontward, rearward, upward, and downward directions during the movement of the motorcycle 2 and thus protecting the internal components of the dashboard 5 from damage caused by vibration. Further, the fixation hole 411 of the support element 4 is fit with a resilient element 413 and then fit over the corresponding fixation stud 51 of the dashboard 5. This effectively absorbs vibration induced by the movement of the motorcycle 2 to provide further suppression of vibration of the dashboard 5. Further, by mounting the rack 6 on the headlight 3 and extending fastening elements S through the holes 62 of the rack 61 to tighten to the opposite sides of the head tube 211 of the motorcycle 2, efficient positioning for assembling can be realized.

## Claims

1. A coupling structure of dashboard and headlight, comprising a dashboard (5) and a headlight (3), whereby
the dashboard (5) has a rear side wall from which a plurality of fixation studs (51) projects, the rear side wall of the dashboard (5) being covered by an enclosure (53), the enclosure (53) of the dashboard (5) having a bottom to which a shock absorption element (532) is mounted;
a support element (4) has an upper portion forming a first fixation end (41) that defines a plurality of fixation holes (411) corresponding to the fixation studs (51) for receiving the fixation studs (51) to extend therethrough, the support element (4) having a lower portion forming a second fixation end (42) that defines a plurality of connection holes (421), each of the fixation holes (411) of the support element (4) receiving a resilient element (413) fit therein; and
the headlight (3) comprises a retention seat (31) from which a plurality of threaded rods (311) projects to correspond to the connection holes (421) of the support element (4), the headlight (3) forming a plurality of coupling holes (32) on outer sides thereof for mounting to a motorcycle frame (22);
the support element (4) is secured between the dashboard (5) and the headlight (3) and the headlight (3) is to be mounted to the frame (22) so that the dashboard (5) is protected from damage caused by vibration induced in the movement of the motorcycle (2).

2. The coupling structure of dashboard and headlight according to claim 1, wherein the second fixation end (42) of the support element (4) forms a bent positioning section (422).

3. The coupling structure of dashboard and headlight according to claim 1, wherein the plurality of fixation studs (51) is arranged in an inverted triangle.

4. The coupling structure of dashboard and headlight according to claim 1, wherein the first fixation end (41) of the support element (4) is formed in a Y-shape.

5. The coupling structure of dashboard and headlight according to claim 1, wherein the fixation holes (411) of the support element (4) each have a side opening (412).

6. The coupling structure of dashboard and headlight according to claim 1, wherein the resilient element (413) forms a through hole (4131) in a center thereof.

7. The coupling structure of dashboard and headlight according to claim 1, wherein the resilient element (413) comprises rubber.

8. The coupling structure of dashboard and headlight according to claim 1, wherein the headlight (3) comprises a rack (6) thereon.

9. The coupling structure of dashboard and headlight according to claim 8, wherein the rack (6) has two sides each carrying a turn signal light (61).

10. The coupling structure of dashboard and headlight according to claim 8, wherein the rack (6) forms through holes (62) corresponding to the coupling holes (32) of the headlight (3).

11. The coupling structure of dashboard and headlight according to claim 1, wherein the shock absorption element (532) comprises rubber.

12. The coupling structure of dashboard and headlight according to claim 1, wherein the back side wall of the dashboard (5) forms threaded positioning pegs (52).

## Patentansprüche

1. Eine zusammengefügte Struktur eines Instrumenntenbretts und Vorderlichtes, welche ein Instrumentenbrett (5) und ein Vorderlicht (6) beinhaltet, wobei das Instrumentenbrett (5) über eine hintere Wandung verfügt, aus der eine Vielzahl an Haltebolzen (51) herausragen; die hintere Seitenwandung des Instrumentenbretts (5) ist mit einer Einfassung (53) bedeckt. Diese Einfassung (53) des Instrumentenbretts (5) beinhaltet an der Unterseite ein Stoßdämpferelement (532);
ein Stützelement (4) mit einem oberen Fixierende (41), welches eine Vielzahl an Fixierlöchem (411) definiert, die den Haltebolzen (51) entsprechen, um diese zu fassen und welche sich durch die Löcher erstrecken, das Stützelement (4) hat einen unteren Bereich, welcher ein zweites Fixierende (42) mit einer Vielzahl an Verbindungdlöchem (421) bildet, jedes der Fixierllöcher (411) des Stützelements (4) kann ein elastisches Element (413) fassen; und
die Vorderlichter (3) beinhalten einen Rückhaltesitz (31), aus dem eine Vielzahl an gewundenen Stäben (311) herausragen, um in die Verbindungslöcher (421) des Stützelements (4) zu passen, die Vorderlichter (3) bilden eine Vielzahl an Zusammenfügungslöchern (32) an der äußeren Seite, um einen Motorradrahmen (22) anzubringen;
das Stützelement (4) ist zwischen dem Instrumentenbrett (5) und dem Vorderlicht (3) gesichert und das Vorderlicht (3) ist an den Rahmen (22) montiert, so dass das Insrumentenbrett (5) gegen Schaden durch Vibration ausgehend von der Bewegung des Motorrads (2) geschützt ist.

2. Die Zusammenfügungsstruktur des Instrumentenbretts und der Vorderlichter gemäß Anspruch 1, wobei das zweite Fixierungsende (42) des Stützelements (4) einen gebogenen Positionierungsbereich (422) bildet.

3. Die Zusammenfiigungsstruktur des Instrumentenbretts und der Vorderlichter gemäß Anspruch 1, wobei die Vielzahl an Haltebolzen (51) in einem umgedrehten Dreick angeordnet ist.

4. Die Zusammenfügungsstruktur des Instrumentenbretts und der Vorderlichter gemäß Anspruch 1, wobei das erste Fixierugsende (41) es Stützelements (4) Y-förmig ist.

5. Die Zusammenfügungsstruktur des Instrumentenbretts und der Vorderlichter gemäß Anspruch 1, wobei die Fixierlöcher (411) des Stützelements (4) an jeder Seite eine Öffnung (412) haben.

6. Die Zusammenfügungsstruktur des Instrumentenbretts und der Vorderlichter gemäß Anspruch 1, wobei am elastischen Element (413) ein Durchgangsloch (4131) in dessen Mitte definiert.

7. Die Zusammenfügungsstruktur des Instrumentenbretts und der Vorderlichter gemäß Anspruch 1, wobei das elastische Element (413) Gummi beinhaltet.

8. Die Zusammenfügungsstruktur des Instrumentenbretts und der Vorderlichter gemäß Anspruch 1, wobei das Vorderlicht (3) ein Gestell (6) an der Oberseite beinhaltet.

9. Die Zusammenfügungsstruktur des Instrumentenbretts und der Vorderlichter gemäß Anspruch 8, wobei das Gestell (6) an beiden Seiten ein Signallicht (61) trägt.

10. Die Zusammenfügungsstruktur des Instrumentenbretts und der Vorderlichter gemäß Anspruch 8, wobei das Gestell (6) Durchgangslöcher (62) bildet, die den Zusammenfügungslöchern (32) des Vorderlichtes (3) entsprechen.

11. Die Zusammenfügungsstruktur des Instrumentenbretts und der Vorderlichter gemäß Anspruch 1, wobei das Stoßdämpferelement (532) Gummi enthält.

12. Die Zusammenfügungsstruktur des Instrumentenbretts und der Vorderlichter gemäß Anspruch 1, wobei die hinter Seitenwandung des Instrmentenbrettes (5) einen gewunden positionierte Aufhänger (52) bildet.

## Revendications

1. Structure de couplage de tableau de bord et phares, comprenant un tableau de bord (5) et un phare (3), **caractérisé par le fait que** :
le tableau de bord (5) a une paroi arrière ayant une pluralité de clous de fixation (51), la paroi arrière du tableau de bord (5) étant couverte par une clôture (53), la clôture (53) du tableau de bord (5) ayant un fond où un élément d'absorption de choc (532) est monté ;
un élément de support (4) a une partie supérieure formant un premier bout de fixation (41) qui définit une pluralité de trous de fixation (411) conformément aux clous de fixation (51) pour recevoir les clous de fixation (51) pour s'étendre, l'élément de support (4) ayant une partie inférieure formant un deuxième bout de fixation (42) qui définit une pluralité de trous de connexion (421), chaque trou fixation (411) de l'élément de support (4) recevant un élément résilient (413) ; et
le phare (3) comprend une siège de retenue (31) ayant une pluralité de tiges filetés (311) pour correspondre les trous de connexion (421) de l'élément de support (4), le phare (3) formant une pluralité de trous de couplage (32) sur les faces extérieures pour monter sur un cadre de moto (22) ;
l'élément de support (4) est sécurisé entre le tableau de bord (5) et le phare (3), et le phare (3) est monté sur le cadre (22) donc le tableau de bord (5) est protégé d'endommagement causé par la vibration produit par le mouvement du moto (2).

2. Structure de couplage de tableau de bord et phares selon la revendication 1, **caractérisé par** le faut que le deuxième bout de fixation (42) de l'élément de support (4) forme une section courbée de positionnement (422).

3. Structure de couplage de tableau de bord de phares selon la revendication 1, **caractérisé par le fait que** la pluralité de clous de fixation (51) est arrangée dans un triangle inversé.

4. Structure de couplage de tableau de bord de phares selon la revendication 1, **caractérisé par le fait que** le premier bout de fixation (41) de l'élément de support (4) est en forme de Y

5. Structure de couplage de tableau de bord de phares selon la revendication 1, **caractérisé par le fait que** chaque trou de fixation (411) de l'élément de support (4) a une ouverture latérale (412).

6. Structure de couplage de tableau de bord de phares selon la revendication 1, **caractérisé par le fait que** l'élément résilient (413) forme un trou de passage (4131) dans un centre.

7. Structure de couplage de tableau de bord de phares selon la revendication 1, **caractérisé par le fait que** l'élément résilient (413) comprend le caoutchouc.

8. Structure de couplage de tableau de bord de phares selon la revendication 1, **caractérisé par** le fait le phare (3) comprend un support (6).

9. Structure de couplage de tableau de bord de phares selon la revendication 8, **caractérisé par le fait que** le support (6) a deux faces, chaque face portant une lumière simple (61).

10. Structure de couplage de tableau de bord de phares selon la revendication 8, **caractérisé par le fait que** le support (6) forme les trous de passage (62) correspondant les trous de couplage (32) du phare (3).

11. Structure de couplage de tableau de bord de phares selon la revendication 1, **caractérisé par le fait que** l'élément d'absorption de choc (532) comprend le caoutchouc.

12. Structure de couplage de tableau de bord de phares selon la revendication 1, **caractérisé par le fait que** le mur arrière du tableau de bord (5) forme les piquets filetés de positionnement (52).
